# EUROPÄISCHE PATENTANMELDUNG

(11) **EP 1 892 123 A2**
(43) Veröffentlichungstag der Anmeldung: **27.02.2008**
(21) Anmeldenummer: 07014247.6
(22) Anmeldetag: 20.07.2007
(51) Int. Cl.: B60B 21/12

(54) **Schlauchloses Speichenrad für Zweiräder, insbesondere für Motorräder**

(30) Priorität: 24.08.2006 DE 102006039686
(71) Anmelder: Bayerische Motoren Werke Aktiengesellschaft, 80809 München (DE)
(72) Erfinder: Seidl, Josef, 84130 Dingolfing (DE)

(57) **Zusammenfassung**

Speichenrad (1) für Zweiräder, insbesondere für Motorräder, mit
• einer Speichenfelge (2), die ein linkes und ein rechtes Felgenhorn (3,4) aufweist, die dazu vorgesehen sind, seitliche Reifenwülste (6,7) eines auf die Speichenfelge (2) aufgezogenen Reifens (13) seitlich abzustützen, und
• einem die beiden Felgenhörner (3,4) miteinander verbindenden Felgenbett (5). Ferner ist ein Felgenband (15) vorgesehen, das sich um einen Außenumfang des Felgenbetts (5) herum erstreckt und das sich luftundurchlässig von außen her an das Felgenbett (5) anschmiegt.

## Beschreibung

Die vorliegende Erfindung betrifft ein schlauchloses Speichenrad für Zweiräder, insbesondere für Motorräder, gemäß dem Oberbegriff des Patentanspruches 1.

Ein derartiges schlauchloses Speichenrad ist aus der WO 2005/058613 A1 bekannt. Bei dem dort beschriebenen schlauchlosen Speichenrad sind die einzelnen in Löcher des Felgenbetts eingesetzten Speichennippel jeweils mit einer separaten Dichtung versehen. Durch die Dichtungen soll eine Abdichtung des durch die Speichenfelge und den Reifen bzw. Mantel gebildeten Lufthohlraums sichergestellt werden. Ein derartiges Konzept zur Abdichtung einer Speichenfelge ist technisch aufwändig. Mit der Anzahl der erforderlichen Dichtungen steigt statistisch gesehen die Wahrscheinlichkeit, dass ein oder mehrere dieser Dichtungen ausfallen.

Aufgabe der Erfindung ist es, ein schlauchloses Speichenrad für Zweiräder, insbesondere für Motorräder zu schaffen, bei dem der durch die Speichenfelge und den Reifen bzw. Mantel gebildete Hohlraum in konstruktiv einfacher und kostengünstiger Weise gegenüber den in der Felge zur Anbindung der Speichen vorgesehenen Löchern abgedichtet wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein schlauchloses Speichenrad für Zweiräder, insbesondere für Motorräder, mit einer Speichenfelge, die ein linkes und ein rechtes Felgenhorn aufweist, die dazu vorgesehen sind, seitliche Reifenwülste eines auf die Speichenfelge aufgezogenen Reifens seitlich abzustützen. Die beiden Felgenhörner sind durch einen mittleren Felgenabschnitt miteinander verbunden, der im Folgenden als "Felgenbett" bezeichnet wird.

Der Kern der Erfindung besteht in einem Felgenband, das sich um einen Außenumfang des Felgenbetts herum erstreckt und das sich luftundurchlässig von außen her an das Felgenbett anschmiegt und den durch den Reifen und die Speichenfelge gebildeten Hohlraum abdichtet.

Um eine einwandfreie Abdichtung zu erreichen, sind der Reifen, das Felgenband und die zwischen dem Felgenband und dem Reifen befindlichen Bereiche der Speichenfelge luftundurchlässig gestaltet.

Nach einer Weiterbildung der Erfindung sind in dem Felgenbett in Umfangsrichtung der Felge verteilt eine Vielzahl von Löchern vorgesehen, in die jeweils ein Speichennippel bzw. ein kopfartig ausgebildetes Speichenende eingesetzt ist, wobei sämtliche Löcher von außen her durch das Felgenband überdeckt und somit gegenüber dem durch den Reifen und die Speichenfelge gebildeten Hohlraum abgedichtet sind.

Vorzugsweise drückt das Felgenband von außen her unmittelbar gegen die Speichennippel bzw. gegen die kopfartigen Speichenenden. Dadurch kann ein selbsttätiges Verdrehen bzw. Lockern der Speichennippel bzw. der kopfartigen Speichenenden verhindert werden.

Vorzugsweise ist das Felgenband in seiner Umfangsrichtung endlos gestaltet bzw. weist einstückig miteinander verbundene Enden auf. Je gleichmäßiger das Felgenband gestaltet ist, umso besser ist seine Dichtwirkung.

Um zu Erreichen, dass sich das Felgenband über den gesamten Umfang der Speichenfelge eng an das Felgenbett anschmiegt, muss das Felgenband, zumindest aber die radiale Innenseite des Felgenbands entsprechend elastisch bzw. aus einem elastischen Material hergestellt sein.

Eine weitere Verbesserung der Abdichtung kann dadurch erreicht werden, dass an der Außenseite des Felgenbetts eine in Umfangsrichtung umlaufende Profilierung vorgesehen ist, die mit einer an der Innenseite des Felgenbandes vorgesehenen komplementären Profilierung in Eingriff steht. Bei den Profilierungen kann es sich beispielsweise um rillenartige Strukturen, Eindrehungen oder um Strukturen ähnlich wie bei einer Rändelung handeln. Vorzugsweise sind die ineinander eingreifenden Profilierungen labyrinthartig mit einer Vielzahl von Hinterschnitten gestaltet, wodurch sich eine besonders hohe Dichtwirkung erreichen lässt.

Alternativ oder ergänzend dazu kann vorgesehen sein, dass das Felgenband mittels eines Klebers auf das Felgenbett aufgeklebt ist. Der Kleber kann als einzige oder zusätzliche Dichtung verwendet werden, welche das Felgenband gegenüber der radialen Außenseite der Speichenfelge abdichtet.

Alternativ oder ergänzend kann vorgesehen sein, dass das Felgenband mittels eines sich um den Außenumfang der Speichenfelge herum erstreckenden Spannrings gegen die Außenseite des Felgenbetts gespannt ist.

An der Außenseite des Felgenbands kann eine wulstartige Erhebung vorgesehen sein, die bei einem Druckverlust den Reifen in radialer Richtung abstützt und dadurch ein Plattdrücken des Reifens verhindert. Dadurch können gewisse "Notlaufeigenschaften" erreicht werden. Bei der wulstartigen Erhebung kann es sich um einen in Umfangsrichtung umlaufenden Wulst oder um mehrere sich über Umfangsabschnitte des Speichenrads erstreckende wulstartige Abschnitte handeln.

Im Folgenden wird die Erfindung im Zusammenhang mit der Zeichnung näher erläutert.

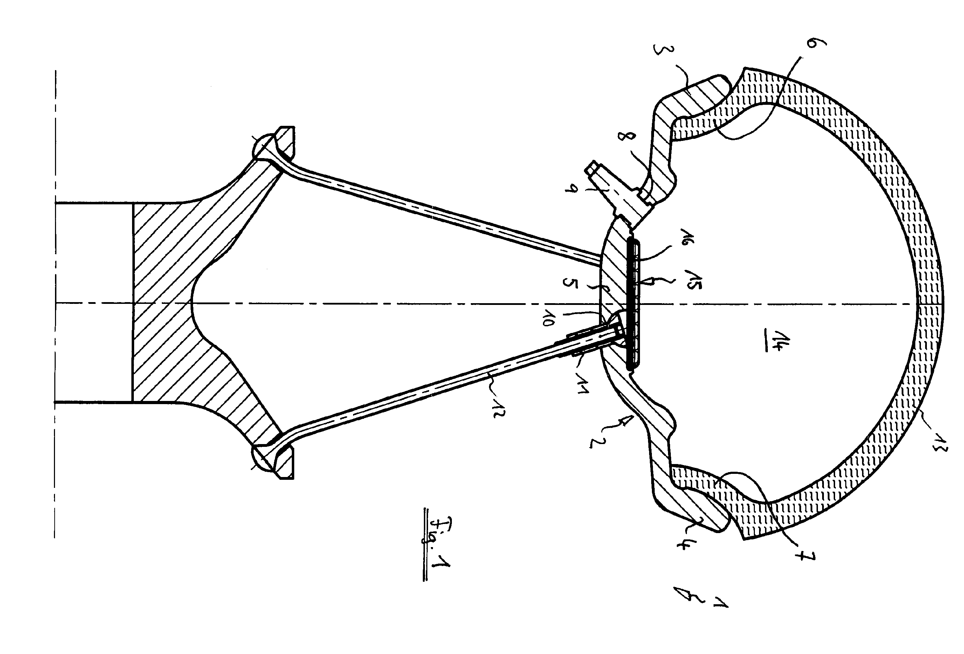

Figur 1 zeigt ein schlauchloses Speichenrad 1 mit einer Speichenradfelge 2, die ein linkes und ein rechtes Felgenhorn 3, 4 aufweist, sowie einen sich zwischen den beiden Felgenhörnern 3, 4 erstreckenden Felgenabschnitt, der im Folgenden als Felgenbett 5 bezeichnet wird. Die beiden Felgenhörner 3, 4 sind dazu vorgesehen, seitliche Reifenwülste 6, 7 seitlich abzustützen. In dem Felgenbett 5 ist eine Durchgangsbohrung 8 vorgesehen, in die ein Ventil 9 eingesetzt ist. Im mittleren Bereich des Felgenbetts 5 sind in Umfangsrichtung verteilt eine Vielzahl von Durchgangslöchern vorgesehen, von denen in der hier gezeigten Schnittdarstellung lediglich ein Durchgangsloch 10 erkennbar ist. In die Durchgangslöcher 10 sind Speichennippel 11 eingesetzt, in die wiederum Enden von Speichen 12 eingeschraubt sind.

Bei einem schlauchlosen Speichenrad muss der durch einen Reifen 13 des Speichenrads und die Speichenfelge 2 gebildete Hohlraum 14 luftdicht abgedichtet sein, insbesondere gegenüber den im Felgenbett 5 vorgesehenen Durchgangslöchern 10.

Diese Abdichtung wird durch ein Felgenband 15 erreicht, dessen radiale Innenseite 16 hinreichend elastisch ist, so dass sich das Felgenband 15 eng an die radiale Außenseite des mittleren Bereichs des Felgenbetts 5 anschmiegt. Das Felgenband 15 überdeckt sämtliche in dem mittleren Bereich des Felgenbetts 5 vorgesehenen Durchgangslöcher 10.

Die Innenseite 16 des Felgenbands 15 kann mit der radialen Außenseite des Felgenbetts 5 mittels eines Klebers verklebt sein, wodurch sich die Dichtwirkung weiter bessert. Eine Klebeverbindung ist jedoch nicht zwingend erforderlich.

Sofern das Felgenband 15 hinreichend elastisch und unter Spannung auf das Felgenbett 5 aufgezogen ist, kann dies schon genügen, um eine einwandfreie Abdichtung zu erreichen. Unterstützt wird die Abdichtung durch den im Hohlraum 14 herrschenden Überdruck, der das Felgenband 15 gegen die radiale Außenseite des Felgenbetts 5 presst.

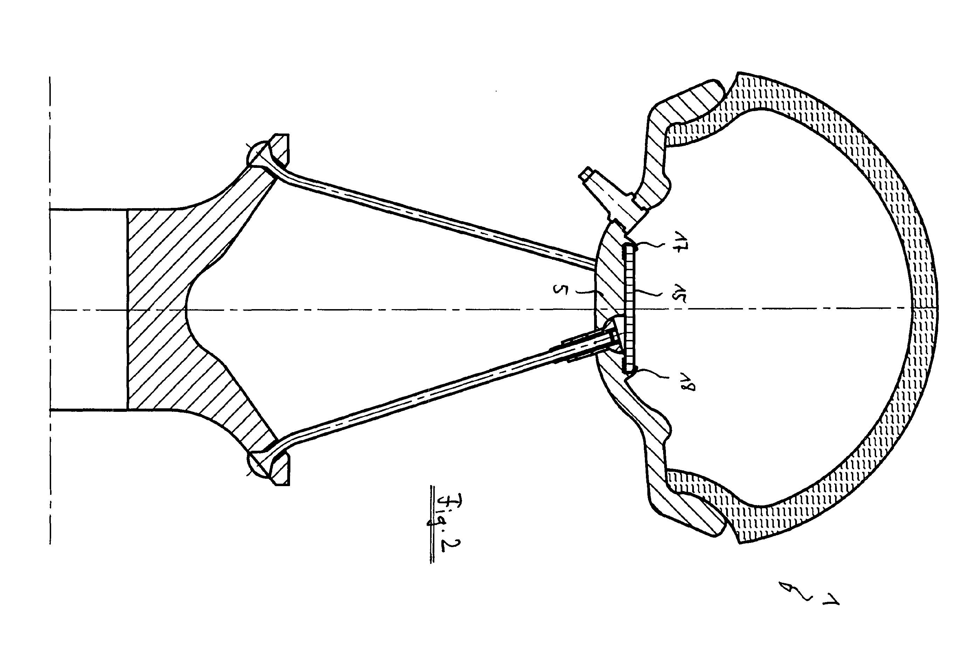

Figur 2 zeigt ein Ausführungsbeispiel, bei dem an der Außenseite des Felgenbetts 5 klammerartige Eindrehungen 17, 18 vorgesehen sind, welche die seitlichen Ränder des Felgenbands 15 klammerartig übergreifen, wodurch eine weiter verbesserte Abdichtung erreicht wird.

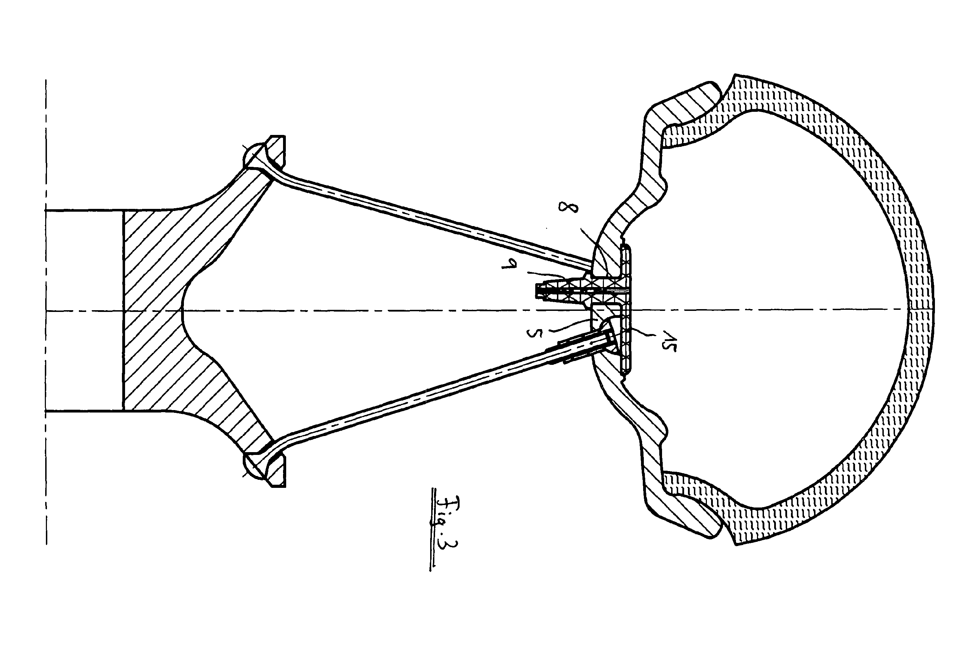

Figur 3 zeigt ein Ausführungsbeispiel, bei dem das Ventil 9 einstückig mit dem Felgenband 15 verbunden ist und sich durch eine im mittleren Bereich des Felgenbetts 5 vorgesehene Durchgangsbohrung 8 hindurch erstreckt. Das Felgenband 15 kann mit der radialen Außenseite des Felgenbetts 5 verklebt sein.

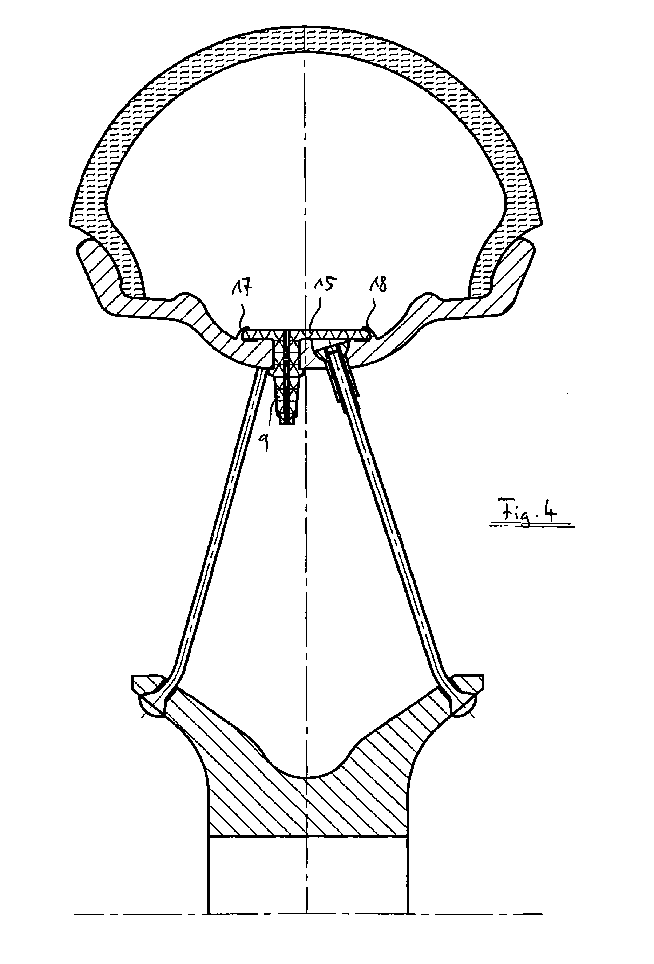

Figur 4 zeigt ein Variante des Ausführungsbeispiels der Figur 3. Hier ist ebenfalls das Ventil 9 einstückig mit dem Felgenband 15 verbunden. Ähnlich wie beim Ausführungsbeispiel der Figur 2 weist die radiale Außenseite des Felgenbetts 5 klammerartige Eindrehungen 17, 18 auf, welche die seitlichen Ränder des Felgenbands 15 ein Stück weit übergreifen.

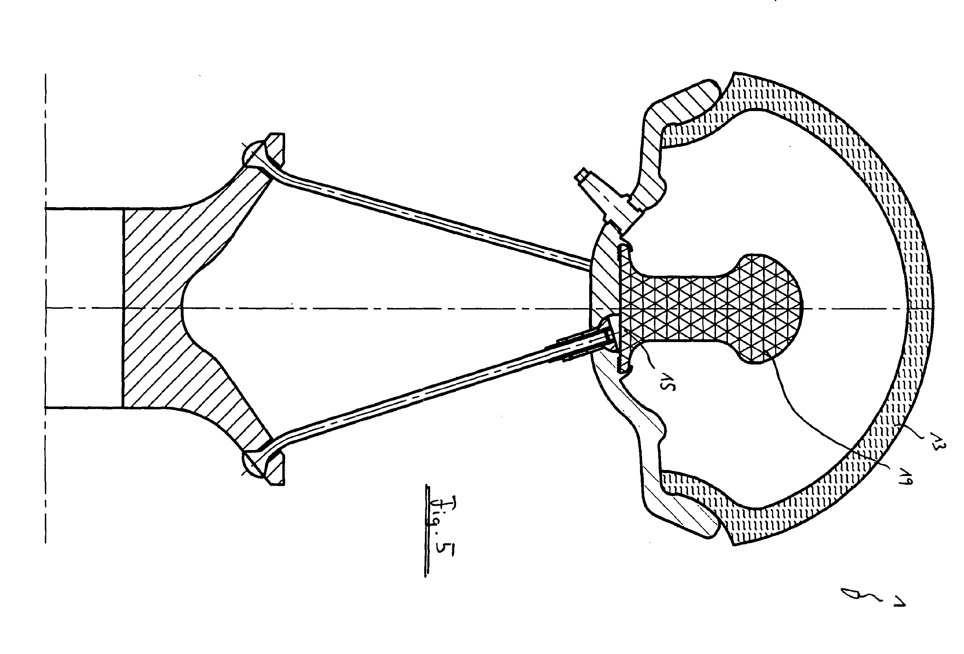

Figur 5 zeigt ein weiteres Ausführungsbeispiel eines Speichenrads 1, bei dem das Felgenband 15 an seiner radialen Außenseite einen umlaufenden Wulst 19 aufweist, der bei einem Druckverlust bzw. bei übermäßiger Belastung des Reifens 13 den Reifen abstützt, d. h. ein Plattdrücken des Reifens verhindert. Dadurch ist eine gewisse Notlauffähigkeit des Speichenrads 1 darstellbar.

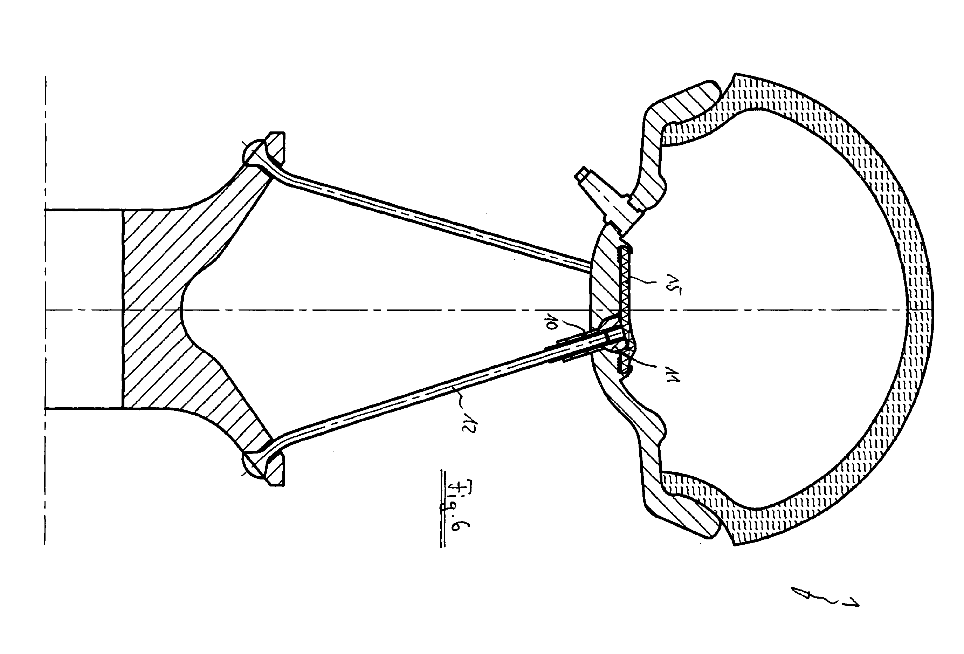

Figur 6 zeigt ein Ausführungsbeispiel 1 eines Speichenrads, bei dem das Felgenband 15 unmittelbar an dem in das Durchgangsloch 10 eingesetzten Speichennippel 11 anliegt. Dadurch wird ein selbsttätiges Losdrehen des Speichennippels und somit eine unerwünschte Lockerung der Speiche 12 verhindert.

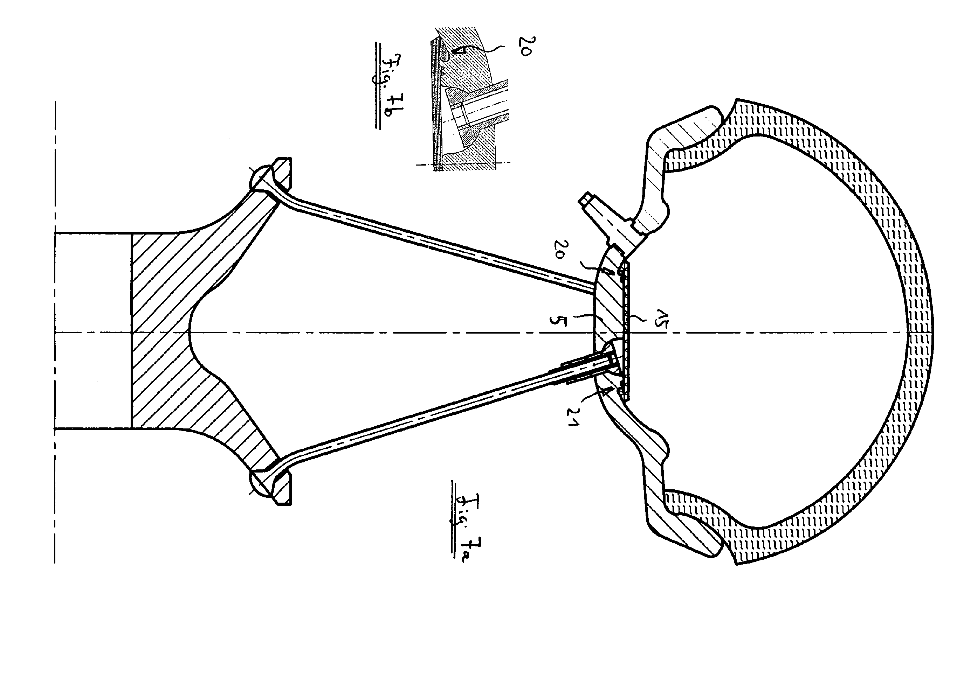

Figur 7a zeigt ein Ausführungsbeispiel, bei dem die radiale Außenseite des Felgenbetts 5 mit einer linken und einer rechten radial äußeren Profilierung versehen ist. Das Felgenband 15 ist im Bereich seiner seitlichen Ränder jeweils mit einer im Wesentlichen komplementär gestalteten radial inneren Profilierung versehen, welche in die radial äußeren Profilierungen 20, 21 eingreifen. Im Detail ist dies aus der vergrößerten Darstellung der Figur 7b deutlich. Deutlich zu erkennen ist, dass die ineinander eingreifenden Profilierungen diverse Hinterschneidungen aufweisen, wodurch einerseits das Felgenband 15 in einer definierten Position gehalten wird und zum anderen die Dichtwirkung verbessert wird.

## Patentansprüche

1. Speichenrad (1) für Zweiräder, insbesondere für Motorräder, mit
• einer Speichenfelge (2), die ein linkes und ein rechtes Felgenhorn (3, 4) aufweist, die dazu vorgesehen sind, seitliche Reifenwülste (6, 7) eines auf die Speichenfelge (2) aufgezogenen Reifens (13) seitlich abzustützen, und
• einem die beiden Felgenhörner (3, 4) miteinander verbindenden Felgenbett (5),
• **dadurch gekennzeichnet, dass** ein Felgenband (15) vorgesehen ist, das sich um einen Außenumfang des Felgenbetts (5), herum erstreckt und das sich luftundurchlässig von außen her an das Felgenbett (5) anschmiegt.

2. Speichenrad (1) nach Anspruch 1, **dadurch gekennzeichnet, dass** der gesamte Reifen (13), das Felgenband (15) und die zwischen dem Felgenband (15) und dem Reifen (13) befindliche Abschnitte der Speichenfelge (2) luftundurchlässig sind.

3. Speichenrad (1) nach Anspruch 1 oder 2, **dadurch gekennzeichnet, dass** in dem Felgenbett (5) in Umfangsrichtung der Speichenfelge (2) verteilt eine Vielzahl von Löchern (10) vorgesehen ist, in die jeweils ein Speichennippel (11) bzw. ein kopfartig ausgebildetes Speichenende eingesetzt ist, und dass das Felgenband (15) sämtliche Löcher (10) von außen her überdeckt.

4. Speichenrad (1) nach Anspruch 3, **dadurch gekennzeichnet, dass** das Felgenband (15) von außen her unmittelbar gegen die Speichennippel (11) bzw. gegen die kopfartigen Speichenenden drückt und somit ein selbsttätiges Verdrehen der Speichennippel (11) bzw. der kopfartigen Speichenenden verhindert.

5. Speichenrad (1) nach einem der Ansprüche 1 bis 4, **dadurch gekennzeichnet, dass** das Felgenband (15) in seiner Umfangsrichtung endlos ist bzw. einstückig miteinander verbundene Enden aufweist.

6. Speichenrad (1) nach einem der Ansprüche 1 bis 5, **dadurch gekennzeichnet, dass** das Felgenband (15) ganz oder zumindest im Bereich seiner radialen Innenseite aus einem elastischen Material besteht.

7. Speichenrad (1) nach einem der Ansprüche 1 bis 6, **dadurch gekennzeichnet, dass** an einer radialen Außenseite des Felgenbetts (5) eine in Umfangsrichtung umlaufende Profilierung vorgesehen ist und dass eine Innenseite des Felgenbandes (15) mit einer dazu im Wesentlichen komplementär gestalteten und darin eingreifenden Profilierung versehen ist, wobei durch die ineinander eingreifenden Profilierungen eine Abdichtung der Speichenfelge (2) gegenüber dem Felgenband (15) erreicht wird.

8. Speichenrad (1) nach Anspruch 7, **dadurch gekennzeichnet, dass** die ineinander eingreifenden Profilierungen labyrinthartig gestaltet sind.

9. Speichenrad (1) nach einem der Ansprüche 1 bis 8, **dadurch gekennzeichnet, dass** das Felgenband (15) mittels eines Klebers auf das Felgenbett (5) aufgeklebt ist, wobei der Kleber die Speichenfelge (2) gegenüber dem Felgenband (15) abdichtet.

10. Speichenrad (1) nach einem der Ansprüche 1 bis 9, **dadurch gekennzeichnet, dass** das Felgenband (15) mittels eines sich um einen Außenumfang der Speichenfelge (2) herum erstreckenden Spannrings auf die Außenseite des Felgenbetts (5) gespannt ist.

11. Speichenrad (1) nach einem der Ansprüche 1 bis 10, **dadurch gekennzeichnet, dass** auf einer radialen Außenseite des Felgenbands (15) ein Wulst (19) vorgesehen ist, der bei einem Druckverlust den Reifen (13) in radialer Richtung abstützt und **dadurch** ein Plattdrücken des Reifens (13) verhindert.

12. Speichenrad (1) nach Anspruch 11, **dadurch gekennzeichnet, dass** der Wulst (19) sich über den gesamten Umfang des Speichenrads (1) erstreckt.

13. Speichenrad (1) nach Anspruch 11, **dadurch gekennzeichnet, dass** an der radialen Außenseite des Felgenbands mehrere sich jeweils über Umfangsabschnitte des Speichenrads (1) erstreckende Wülste (19) vorgesehen sind.

14. Motorrad mit einem Speichenrad (1) nach einem der Ansprüche 1 bis 13.
